# EUROPEAN PATENT APPLICATION

(11) **EP 2 007 079 A1**
(43) Date of publication of application: **24.12.2008**
(21) Application number: 07012309.6
(22) Date of filing: 22.06.2007
(51) Int. Cl.: H04L 12/46

(54) **Method and device for routing data traffic and communication system comprising such device**

(71) Applicant: Nokia Siemens Networks Oy, 02610 Espoo (FI)
(72) Inventor: Schmidtke, Uwe, 17493 Greifswald (DE)
(74) Representative: Bruglachner, Thomas E.

(57) **Abstract**

A method and a device for routing data traffic are provided, the method comprising following steps of (i) conducting a layer-3 lookup; (ii) mapping of the layer-3 lookup result to an addressing scheme, wherein said addressing scheme comprises a VLAN scheme; and (iii) routing data traffic according to the addressing scheme.

## Description

The invention relates to a method and to a device for routing data traffic and to a communication system comprising such a device.

Access Networks provide interfaces for the end users via so-called Access Nodes (AN). In particular an IP Digital Subscriber Line Access Multiplexer (DSLAM) supplies various user interfaces, e.g., Digital Subscriber Line (xDSL), Plain Old Telephone Service (POTS a/b) or Ethernet. An alternative Access Node refers to a Gigabit Passive Optical Network (GPON) comprising Optical Line Termination (OLT) and Optical Network Terminal (ONT).

Further, according to the OSI Model (Open Systems Interconnection Basic Reference Model), a Network Layer (also referred to as layer-3) provides the functional and procedural means of transferring variable length data sequences from a source to a destination via one or more networks while maintaining the quality of service requested by the Transport layer. The Network layer performs network routing functions, and might also perform fragmentation and reassembly, and report delivery errors. Routers operate at this layer-sending data throughout the extended network and making the Internet possible.

An Access Node comprising a layer-3 routing function has to provide the result of a layer-3 lookup, i.e. an IP address.

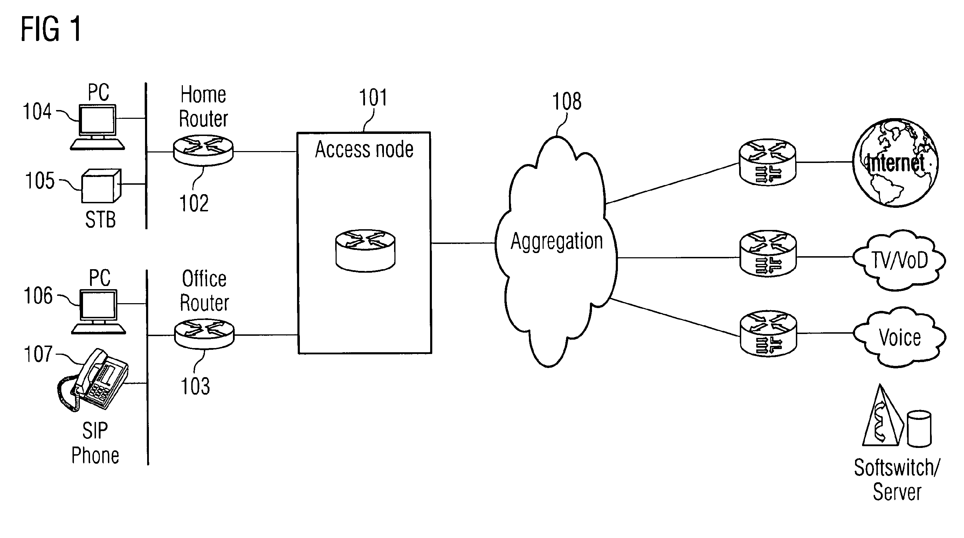

**Fig.1** shows an Access Node 101 connected to a Home Router 102 and to an Office Router 103. The Home Router 102 is further connected to a PC 104 and to a Set-Top Box STB 105, the Office Router 103 is further connected to a PC 106 and to an SIP Phone 107. In uplink direction the Access Node 101 is connected via an Aggregation 108 with, e.g., the Internet and/or TV, Video on Demand or Voice Server.

A routing function towards subscriber 104 to 107 is employed within the Access Node 101 directing traffic from the Aggregation 108 to the respective addressee. Such routing function is based on the IP address of the respective subscriber 104 to 107.

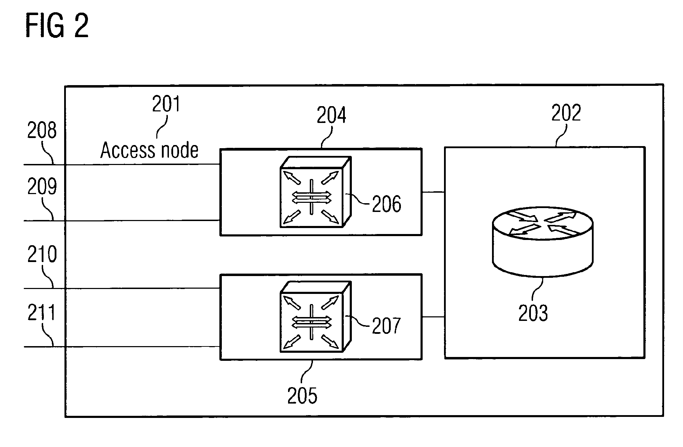

However, in real-world scenarios several bridging stages are concatenated, wherein each stage selects its subsequent stage and hence directs traffic to this stage only. **Fig.2** depicts this scenario. Here, an Access Node 201 comprises a central card 202 comprising a Router 203. This central card 202 is connected with a line card 204 comprising a layer-2 switch 206 and two lines 208 and 209, the central card 202 is further connected with a line card 205 comprising a layer-2 switch 207 and two lines 210 and 211.

As a disadvantage, each bridge directing traffic to a subsequent bridge needs to provide a layer-3 routing function in order to find out where to route the traffic next. Such layer-3 functionality is expensive. Furthermore, such a solution realizes distributed routing, which is difficult to administer from a provider's standpoint.

The **problem** to be solved is to overcome the disadvantages as set forth above and to provide a central routing approach with a cost-efficient implementation.

This problem is solved according to the features of the independent claims. Further embodiments result from the depending claims.

In order to overcome this problem, a method for routing data traffic is provided comprising the following steps:
- conducting a layer-3 lookup;
- mapping of the layer-3 lookup result to an addressing scheme, wherein said addressing scheme comprises a VLAN scheme;
- routing data traffic according to the addressing scheme.

Hence, a layer-3 lookup is performed and the result of such lookup is used to utilize an addressing scheme, which itself comprises and/or utilized a VLAN scheme. The addressing scheme can then be used for routing data traffic.

Data traffic may comprise all kinds of traffic, in particular pure data, video, audio, signaling, maintenance, redundancy, protocol-relevant data or combinations thereof.

The VLAN scheme refers to the mechanism provided by Virtual LANs.

In an embodiment, the addressing scheme can be used to forward said data traffic transparently via layer-2.

Hence, layer-2 entities in the subsequent routing path may not change the routing applied according to the addressing scheme.

In another embodiment, the layer-3 lookup produces an IP address, said address is mapped to a VLAN scheme.

In a further embodiment, the VLAN scheme allows to identify a subscriber and a service. Hence, the addressee can be explicitly identified by said addressing scheme that may utilize the VLAN scheme.

In a next embodiment, the addressing scheme comprises a port identifier.

In particular the addressing scheme provided herein comprises a VLAN scheme, e.g., a VLAN tag, and a port identifier for addressing a subscriber (and a service associated with said subscriber).

It is also an embodiment that the method provided can be utilized in a Gigabit Passive Optical Network (GPON).

The problem stated above is also solved by a device for routing data traffic comprising a processor unit that is arranged and/or equipped such that the method as described herein is executable on said processor unit.

According to an embodiment, said device is a communication device.

According to another embodiment, said device is a layer-3 switch.

The problem stated above is also solved by a communication system comprising the device as described herein.

Embodiments of the invention are shown and illustrated in the following figure:

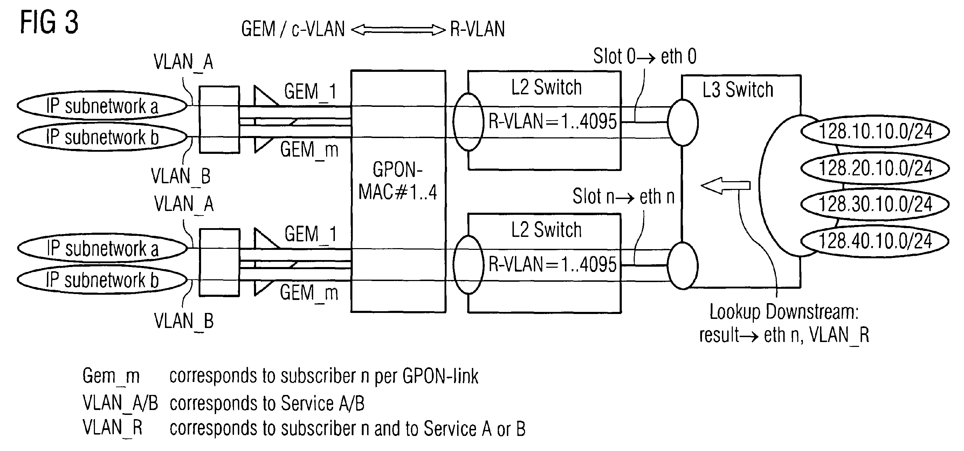

- Fig.3: shows a scenario for a gigabit passive optical network (GPON) access node (AN) on the basis of ITU-T G.984 utilizing a layer-3 switch functionality that applies a centralized routing approach.

As an advantage, the approach provided herewith allows an implementation of a centralized routing within an access node. Hence, the layer-3 routing can be performed in the central part of the access node only. Each subsequent (bridging) stage can forward such traffic without the necessity to also perform such layer-3 routing. Hence, subsequent network components towards the user (i.e. in downlink direction) do not have to contain an expensive layer-3 functionality.

Another advantage of the approach provided herewith is the direct addressing scheme of the subscriber. It suggests a centralized routing approach in combination with a direct addressing scheme of a user interface based on a layer-3 routing process.

As a result of a layer-3 lookup based on an IP address of a particular user and/or service an addressing of said user and/or service may be conducted.

Therefore, the user interface and the service across all bridging stages are logically mapped at the layer-3 router. Advantageously it can be ensured that subsequent bridging stages cannot revoke this routing-decision based on layer-2 forwarding decisions.

The standard IEEE 802.1q defines a VLAN tag that contains a VLAN-ID. 802.1 VLANs are introduced to separate physical LANs on a logical level. In other words, there is no traffic among different VLANs from a layer-2 perspective.

These VLANs hence define so-called broadcast domains. A layer-3 router concludes the layer-2 network. As a VLAN defines a separate layer-2 network, it also defines a dedicated layer-3 interface for the router. A layer-3 routing decision may result in a layer-3 interface across which the traffic can be forwarded. Hence, the respective VLAN can be deemed definite by such forwarding decision.

As for subsequent switching stages each VLAN establishes a singular layer-2 domain. There is no layer-2 traffic between different VLANs. Thus, the routing result of a VLAN is maintained along subsequent switching stages.

The approach provided herewith suggests an internal VLAN scheme that is predominantly independent of an outer VLAN topology. Hence, at an ingress port of the overall system, a VLAN tag can be added (also referred to as R-VLAN) together with a unique VLAN-ID per user port and service.

**Fig.3** shows an example for a gigabit passive optical network (GPON) access node (AN) on the basis of ITU-T G.984.

Identification of a subscriber port is processed on a TC layer by a GEM-port ID (GEM = GPON Encapsulation Method). This information regarding the subscriber port is used for setting up a unique VLAN, the so-called R-VLAN. In addition, the service is identified by a VLAN-tag that is flagged at the subscriber port or beyond.

From a router's perspective, that router preferably being arranged on a central card within the access node, each R-VLAN constitutes a router port on its own and can be addressed directly at the layer-3-lookup by the revealed IP address.

Furthermore, each GPON-link works as a separate physical port at the router (eth n). Thus, the R-VLAN or each GPON-link can be reused, in particular because the result of the layer 3-lookup utilizes a R-VLAN and a physical port (eth n) and therefore is unique again.

### Advantages:

An implementation of a system according to the approach provided herewith can be easily achieved and is cost efficient.

In particular, an implementation of a router comprising a data plane, in particular with a layer-3 switch and a layer-3 control plane and corresponding routing protocols, can be provided centrally and only once.

In addition, the access node can be regarded as black box utilizing a layer-3 lookup process directly addressing a user port at a subscriber.

## Claims

1. A method for routing data traffic comprising the following steps:
- conducting a layer-3 lookup;
- mapping of the layer-3 lookup result to an addressing scheme, wherein said addressing scheme comprises a VLAN scheme;
- routing data traffic according to the addressing scheme.

2. The method according to claim 1, wherein the addressing scheme is utilized for routing data traffic transparently via layer-2.

3. The method according to any of the preceding claims, wherein the layer-3 lookup produces an IP address, said IP address is mapped to a VLAN scheme (R-VLAN).

4. The method according to claim 3, wherein the VLAN scheme allows to identify a subscriber and a service.

5. The method according to any of the preceding claims, wherein the addressing scheme comprises a port identifier (eth n).

6. The method according to any of the preceding claims utilized in a Gigabit Passive Optical Network.

7. A device for routing data traffic comprising a processor unit that is arranged such that the method according of any of the preceding claims is executable on said processor unit.

8. The device according to claim 7, wherein said device is a communication device.

9. The device according to claim 7, wherein said device is a layer-3 switch.

10. Communication system comprising the device according to any of claims 7 to 9.
